# EUROPÄISCHE PATENTSCHRIFT

(11) **EP 0 981 703 B1**
(45) Veröffentlichungstag und Bekanntmachung des Hinweises auf die Patenterteilung: **11.06.2003**
(21) Anmeldenummer: 98928160.5
(22) Anmeldetag: 30.04.1998
(51) Int. Cl.: F16J 15/32

(54) **BÜRSTENDICHTUNG**
BRUSH-HAIR SEAL
JOINT-BROSSE

(30) Priorität: 16.05.1997 DE 19720649
(43) Veröffentlichungstag der Anmeldung: 01.03.2000
(73) Patentinhaber: MTU Aero Engines GmbH, 80995 München (DE)
(72) Erfinder: WERNER, Klemens, D-80999 München (DE); GAIL, Alfons, D-86316 Friedberg (DE)
(74) Vertreter: Einsele, Rolf W.
(86) Internationale Anmeldenummer: DE9801204
(87) Internationale Veröffentlichungsnummer: WO98053230

(56) Entgegenhaltungen:
- EP-A- 0 617 216
- EP-A- 0 778 431
- WO-A-86/05252
- DE-A- 3 907 614

## Beschreibung

Die Erfindung betrifft eine Bürstendichtung gemäß dem Oberbegriff von Anspruch 1.

Derartige Bürstendichtungen werden bspw. bei Gasturbinen eingesetzt, um den Zwi-schenraum zwischen einem Gehäuse und einem mit einer verhältnismäßig hohen Drehzahl rotierenden Rotor gegen Leckage abzudichten. Im allgemeinen erfolgt die-ses in Anwesenheit von unter Druck stehendem, heißen Gas. Da sich unter diesen Bedingungen mit einfachen Gummiringdichtungen keine zufriedenstellende Dichtwir-kung erzielen läßt, sind zahlreiche verschiedene Bürstendichtungen entwickelt wor-den. Bei diesen stehen die Enden der Borsten, die zu einem dichten Borstenpaket zusammengefaßt sind, über die Innenkante einer Innenbohrung der Stützplatte vor und dichten so einen möglichst klein zu haltenden Zwischenraum zwischen der In-nenkante der Stützplatte und der Rotoroberfläche ab. Dieser Zwischenraum ist stets vorhanden, da sich die Abmessungen der Dichtung, des Gehäuses und des Rotors infolge von Wärmespannungen bzw. -dehnungen od. dgl. ändern können und somit aus Sicherheitsgründen ein Mindestspiel zwischen der Stützplatte und dem Rotor nicht unterschritten werden darf.

Liegt ein großer Differenzdruck an der Dichtung an, so stützt die auf der Niedrigdruckseite angeordnete Stützplatte die Borsten gegen eine Durchbiegung zur Niederdruckseite in einer parallel zur Rotorachse verlaufenden Richtung. Einer Durchbiegung der Borsten wird entgegengewirkt, weil durch diese deren Länge verringert und somit der Zwischenraum zwischen der Innenkante der Stützplatte und der Rotoroberfläche geöfnet wird, was zu einem Anstieg der Leckage führt. Eine Durchbiegung der vorstehenden Borstenenden läßt sich jedoch nicht vermeiden.

Vor- und nachstehend wird unter einer Axialrichtung eine parallel zur Längsachse des Rotors verlaufende Richtung und unter einer Radialrichtung bzw. -ebene eine senkrecht zu dessen Längsachse verlaufende Richtung bzw. sich erstreckende Ebe-ne verstanden.

Bei einer aus der EP 0 453 315 bekannten Bürstendichtung dient die gesamte Stütz-platte als Stützfläche, an der die Borsten bis auf ihre vorstehenden Enden über ihre gesamte restliche Länge anliegen. Zur Verbesserung der Dichtwirkung ist die Innen-kante einer Innenbohrung der Stützplatte mit einer abtragbaren Materialschicht versehen, um die Stützfläche zu verfängern und die Borsten bis nahe an deren Spitzen abzustützen und gleichzeitig den Zwischenraum zwischen der Stützplatte und dem Rotor zu verringern.

Bei dieser Dichtung erweist sich jedoch insbesondere bei anliegendem Differenz-druck als nachteilig, daß die Borsten bei einer Auslenkung des Rotors, die bspw. aufgrund von Wärmespannungen bzw. -dehnungen auftreten kann, radial nach außen ausweichen, in dieser Lage infolge aerodynamischer Effekte jedoch auch nach Rück-kehr des Rotors in die zentrische Position verbleiben. Durch das seitliche Auswei-chen der Borsten wird der Zwischenraum zwischen der Stützplatte und dem Rotor geöffnet, so daß die Leckage deutlich ansteigt. Es ist bekannt, daß die Borsten dabei an der Stützplatte haften und sich erst nach vollständiger Entlastung, d.h. einem Differenzdruck von annähernd null, in ihre ursprüngliche Lage zurückzubewegen und die Zwischenräume wieder schließen bzw. abdichten.

Aus der WO-A-86/05252 ist eine Bürstendichtung mit einer Vielzahl von Borsten in einer Halterung zur Abdichtung von zwei Räumen unterschiedlichen Druckes be-kannt, bei der die Borsten zur Verbesserung der Dichteinwirkung zur Seite des höhe-ren Druckes in einem Winkel β von 5° bis 45°durch Einstellmittel ausgerichtet sind. Bei anliegendem Differenzdruck werden die Borsten von der Seite höheren Druckes gegen die Dichtfläche gepreßt, was einerseits zu einer sicheren Dichtwirkung, ande-rerseits jedoch zu einem erheblichen Verschleiß der Borsten führt.

Die DE 3907 614 A1 offenbart eine Bürstendichtung, bei der die Borsten in einem geschlitzten Rohr eingespannt sind, welches zwischen zwei zu einem Gehäuse zu-sammengefügten Stützring eingeklemmt ist, wobei die Innenkante des hochdruckseitigen Stützrings einen größeren Abstand zu der Oberfläche eines Rotors aufweist als die Innenkante des niederdruckseitigen Stützrings. Eine besondere, an die Borsten angepaßte Ausgestaltung des niederdruckseitigen Stützrings wird ebenso wie ein Anstellen der Borsten nicht beschrieben.

Aus der EP 0 778 431 A1 ist eine Bürstendichtung bekannt, bei der ein zwischen den zur Radialrichtung nicht angestellten Borsten und der Niederdruckseite angeordnetes Stützelement so ausgebildet ist, daß zwischen den Borsten und dem Stützele-ment eine Kammer vorliegt, der zur Erhöhung der Rückstellkraft der Borsten Fluid zugeführt wird, dessen Druck höher als jener auf der Niederdruckseite ist.

Die EP 0 617 216 A1 offenbart eine Bürstendichtungseinrichtung mit einer eine Aus-sparung aufweisenden Stützplatte, an deren freiem Endabschnitt sich die Borsten nach Druckbeaufschlagung anlegen.

Der Erfindung liegt die Aufgabe zugrunde, eine Bürstendichtung der eingangs be-schriebenen Gattung so zu verbessern, daß auch bei hohen Differenzdrücken und Auslenkungen des Rotors eine gute Dichtwirkung erzielt wird.

Die Lösung der Aufgabe ist erfindungsgemäß durch die kennzeichnenden Merkmale von Anspruch 1 gekennzeichnet.

Hieraus ergibt sich der Vorteil, daß die Borsten lediglich mit ihren Endabschnitten an der Stützfläche abgestützt sind, wodurch ihre Flexibilität auch bei hohen Differenzdrücken deutlich vergrößert wird. Da die Borsten in ihren von der Einspannstelle entfernten Endabschnitten ihre maximale Flexibilität aufweisen und zudem durch die strömende Leckluft ständig zu Schwingungen angeregt werden, folgen die Borsten der Rotorbewegung, d.h. sie werden dessen Auslenkung seitlich nach außen gedrückt und bewegen sich unmittelbar nach der Rückkehr des Rotors in die zentri-sche Position in ihre ursprüngliche Lage zurück. Zudem bildet sich in dem Zwischen-raum zwischen den Borsten und der Stützplatte durch die strömende Leckluft ein Luftpolster, was die Reibung zwischen den Borsten und der Stützfläche vermindert und einem Haften der Borsten an der Stützplatte entgegenwirkt.

Die Borsten sind gegenüber einer Radialebene, d.h. einer radial zur Rotorlängsachse verlaufenden ebene, zur Stützplatte hin geneigt, damit eine definierte Anlage der Endabschnitte der Borsten an dem Stützabschnitt zu erzielen ist. Bevorzugt sind die Borsten in einem Winkel von etwa 6°geneigt.

In einer weiteren bevorzugten Ausgestaltung erstreckt sich die Stützplatte von dem Einspannbereich der Borsten an mit axialem Abstand zu den Borsten und weist angrenzend an die Innenkante einer Innenbohrung in der Stützplatte einen zu den Bor-sten geneigten Bereich auf, an dessen innerer Seitenfläche ein Stützabschnitt aus-gebildet ist, an dem die Endabschnitte der Borsten abzustützen sind.

Es ist vorteilhaft, daß die Länge der an dem Stützabschnitt abzustützenden Endab-schnitte der Borsten maximal ein Vierteil von deren Gesamtlänge beträgt, da die Borsten in diesen von dem Einspannbereich entfernten Endabschnitten ihre maximale Flexibilität aufweisen, so daß die Borsten hier, trotz Anlage an dem Stützab-schnitt, nach einer Ausweichbewegung sofort wieder in ihre ursprüngliche Lage zurückfedern.

Weiterhin ist es vorteilhaft, daß die Innenkante der Frontplatte einen größeren Ab-stand zu der Oberfläche des Rotors aufweist als die Innenkante der Stützplatte. Zwar besteht auch zwischen der Innenkante der Frontplatte und der Oberfläche des Ro-tors nur ein kleiner Zwischenraum, es können aber größere Fertigungstoleranzen zugelassen werden. Dadurch wird der sog. "Blow down"-Effekt minimiert und es tritt kein erhöhter Verschleiß der Borsten auf. Zudem werden die Borsten dadurch gegen Beschädigungen beim Montieren/Demontieren sowie gegen Beschädigungen durch Luftwirbel geschützt.

Bevorzugt sind die Borsten zwischen der Frontplatte und der Stützplatte einseitig eingespannt, so daß sie auf einfache Weise mit verschiedenen Anstell- bzw. Neigungswinkeln zu einer Radialebene zwischen der Front- und der Stützplatte gehalten werden können.

Es ist zweckmäßig, im Einspannbereich zwischen den Borsten und der Frontplatte sowie der Stützplatte ein Klemmstück anzuordnen, worin das um einen Seelendraht gewickelte Borstenpaket eingeklemmt ist.

Weitere bevorzugte Ausgestaltungen der Erfindung sind in den Unteransprüchen beschrieben.

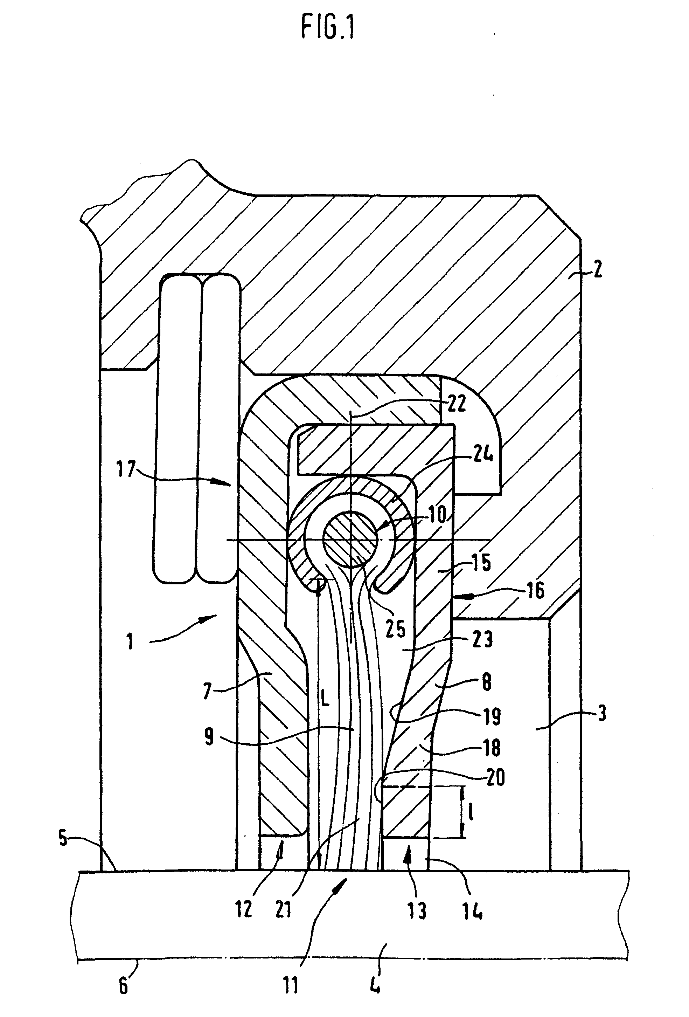

Im folgenden wird die Erfindung unter Bezugnahme auf eine Zeichnung (Fig. 1) näher erläutert, die eine schematische Querschnittsansicht eines Ausführungsbeispiels der erfindungsgemäßen Bürstendichtung zeigt.

Fig. 1 zeigt eine im ganzen mit 1 bezeichnete Bürstendichtung, die in einem Gehäuse 2 eingespannt ist. Durch eine Bohrung 3 in dem Gehäuse 2 erstreckt sich ein Rotor 4, dessen Oberfläche mit 5 und dessen Längsachse mit 6 bezeichnet ist. Die Bür-stendichtung 1 umfaßt im wesentlichen eine Frontplatte 7, eine Stützplatte 8 und eine Vielzahl von dicht gepackten Borsten 9, die zwischen der Frontplatte 7 und der Stützplatte 8 in 10 fest eingespannt sind. Bei einem an der Bürstendichtung anlie-genden Differenzdruck ist die Frontplatte 7 auf der Hochdruckseite und die Stützplatte 8 auf der Niederdruckseite angeordnet. Die einseitig eingespannten Borsten 9 erstrecken sich zwischen der Frontplatte 7 und der Stützplatte 8 und stehen mit ihrem freien, von der Einspannstelle 10 entfernten Enden 11 über die Innenkanten 12 bzw. 13 der Frontplatte 7 und der Stützplatte 8 vor. Die Borsten 9 berühren mit ihren Enden 11 die Oberfläche 5 des Rotors 4 und dichten so einen ringförmigen Zwischenraum 14 zwischen der Innenkante 12 der Stützplatte 8 und der Oberfläche 5 des Rotors 4 ab.

Die Frontplatte 7 und die Stützplatte 8 weisen jeweils eine zur Längsachse 6 des Rotors 4 koaxiale Innenbohrung auf, so daß deren Innenkanten 12 bzw. 13 zur Oberfläche 5 des Rotors 4 beabstandet sind. Auch die Innenkante 12 der Frontplatte 7 besitzt nur ein verhältnismäßig geringes Spiel zur Rotoroberfläche 6. Die Borsten 9, die aus verschiedenen, dem Fachmann bekannten Materialien bestehen können, werden dadurch vor Beschädigungen beim Handling und durch Luftwibel während des Betriebs geschützt.

Die Stützplatte 8 weist im vorliegenden Ausführungsbeispiel einen sich in einer Radialebene zur Rotorachse 6 erstreckenden, ersten Abschnitt 15 auf, dessen Außenfläche 16 zur paßgenauen Anbringung der Bürstendichtung 1 an dem Gehäuse 2 parallel zu einer Außenfläche 17 der Frontplatte 7 ist. Die Frontplatte 7 und die Stützplatte 8 weisen ferner jeweils einen rechtwinklig nach innen abgewinkelten Abschnitt auf, welche jedoch vorliegend ohne Bedeutung und nur der Vollständigkeit halber erwähnt sind.

Ein an die Innenkante 13 der Stützplatte 8 angrenzender Bereich 18 der Stützplatte 8 ist zu den Borsten 9 hin geneigt, wobei an dessen Innenseite 19 eine Stützfläche 20 ausgebildet ist, an der die Borsten 9 mit ihren Endabschnitten 21 abzustützen sind. Wie an der Einspannstelle 10 zu erkennen ist, sind die Borsten 9 bzw. das Borstenpaket über einen Seelendraht 25 gewickelt und mittels eines als geschlitztes Rohr ausgebildeten Klemmstücks 24, das im Querschnitt die Form eines offenen Rings (C-Rohr) besitzt, geklemmt. Die Borsten 9 sind in bezug zu einer Radialebene 22 zur Stützplatte 8 hin geneigt. Der Winkel beträgt etwa 6°. Auf diese Weise läßt sich eine definierte Anlage der Endabschnitte 21 der Borsten 9 an der Stützfläche 20 der Stützplatte 8 erzielen. So läßt sich bei sehr hohen Differenzdrücken der Anpreßdruck der Borsten 9 an den Stützabschnitt 20 reduzieren.

Die radiale Länge I der Stützfläche 20 der Stützplatte 8 beträgt etwa ein Fünftel der freien (Gesamt-)Länge L der Borsten 9, so daß sich die Borsten 9 über einen großen Bereich ihrer Länge L unter Bildung eines Zwischenraums 23 mit Abstand zur Innenfläche 19 der Stützplatte 8 erstrecken.

Da die Borsten 9 in ihren von der Einspannstelle 10 entfernten Endabschnitten 21 am flexibelsten sind und zudem durch die in den Zwischenraum 23 strömende Leckluft ständig zu Schwingungen angeregt werden, weichen die Borsten 9 bei einer Auslenkung des Rotors 4 aus seiner zentrischen Position seitlich aus, bewegen sich aber nach dem Wegfall der die Auslenkung des Rotors 4 bewirkenden Ursache, wie z.B. Wärmespannungen, unmittelbar mit dem Rotor 4 zurück in ihre ursprüngliche Lage. Durch ein sich in dem Zwischenraum 23 bildendes Luftpolster wird darüberhinaus die Reibung zwischen den Endabschnitten 21 der Borsten 9 und des Stützabschnitts 20 der Stützplatte 8 verringert. Aufgrunddessen ist auch bei anliegendem Differenzdruck und Auslenkungen des Rotors 4 eine gute Dichtwirkung der Bürstendichtung 1 gewährleistet, so daß kein erheblicher Anstieg der Leckage auftritt.

## Patentansprüche

1. Bürstendichtung, zum Abdichten eines Rotors gegen ein Gehäuse mit einer Boh-rung, durch das sich der Rotor erstreckt, mit einer Frontplatte (7) und einer Stützplatte (8), die an dem Gehäuse (2) angebracht sind und zwischen denen eine Vielzahl von Borsten (9) so gehalten sind, daß sie mit ihren freien Enden über eine Innenkante (13) der Stützplatte (8) vorstehen und eine Oberfläche (5) des Rotors (4) berühren, wobei die Innenkante (13) der Stützplatte (8) einen geringen Ab-stand zu der Oberfläche (5) aufweist und die Stützplatte (8) die Borsten (9) gegen eine Durchbiegung stützt und so ausgebildet ist, daß die Borsten (9) mit ihren Endabschnitten (21) an einem Stützabschnitt (20) der Stützplatte (8) abzustützen sind und sich über ihre restliche Länge (L-I) mit Abstand zur Stützplatte (8) erstrecken, **dadurch gekennzeichnet, daß** eine Innenkante (12) der Frontplatte (7) einen geringen Abstand zur Oberfläche (5) des Rotors (4) aufweist und daß die Borsten (9) zur definierten Anlage an den Stützabschnitt (20) in ihrer Einspannstelle (10) gegenüber einer Radialebene (22) zur auf der Niederdruckseite angeordneten Stützplatte (8) hin geneigt sind.

2. Bürstendichtung nach Anspruch 1, **dadurch gekennzeichnet, daß** sich die Stütz-platte (8) mit axialem Abstand zu den Borsten (9) erstreckt und angrenzend an die Innenkante (13) einer Innenbohrung in der Stützplatte (8) einen zu den Borsten (9) geneigten Bereichen (18) aufweist, an dessen innerer Seitenfläche (19) der Stütz-abschnitt (20) ausgebildet ist, an dem die Endabschnitte (21) der Borsten (9) ab-zustützen sind.

3. Bürstendichtung nach Anspruch 1 oder 2, **dadurch gekennzeichnet, daß** die Bor-sten (9) in einem Winkel von etwa 6° geneigt sind.

4. Bürstendichtung nach einem oder mehreren der vorhergehenden Ansprüche, **da-durch gekennzeichnet, daß** die Länge (I) der an den Stützabschnitten (20) abzu-stützenden Endabschnitte (21) der Borsten (9) maximal ein Viertel von der Ge-samtlänge (L) beträgt.

5. Bürstendichtung nach Anspruch 4, **dadurch gekennzeichnet, daß** die Länge (I) etwa 2 mm beträgt.

6. Bürstendichtung nach einem oder mehreren der vorhergehenden Ansprüche, **da-durch gekennzeichnet, daß** die Innenkante (12) der Frontplatte (7) einen größeren Abstand zu der Oberfläche (5) des Rotors (4) aufweist als die Innenkante (13) der Stützplatte (8).

7. Bürstendichtung nach einem oder mehreren der vorhergehenden Ansprüche, **da-durch gekennzeichnet, daß** die Borsten (9) mit ihren von den freien Enden (11) entfernten Enden zwischen der Frontplatte (7) bzw. der Stützplatte (8) eingespannt sind.

8. Bürstendichtung nach Anspruch 7, **dadurch gekennzeichnet, daß** im Einspannbereich (10) zwischen den Borsten (9) und der Frontplatte (7) sowie der Stützplatte (8) ein Klemmstück (24) angeordnet ist.

9. Bürstendichtung nach Anspruch 8, **dadurch gekennzeichnet, daß** das Klemmstück (24) ein geschlitztes Rohr ist.

## Claims

1. Brush seal for providing a seal between a rotor and a housing with a bore, through which the rotor extends, comprising a front plate (7) and a support plate (8) mounted on the housing (2) between which a plurality of bristles (9) are retained so as to project beyond an inside edge (13) of the support plate (8) by their free ends and touch a surface (5) of the rotor (4), the inside edge (13) of the support plate (8) being at a short distance from the surface (5) and the support plate (8) supporting the bristles (9) to prevent them from sagging, designed so that the bristles (9) are supported on a support portion(20) of the support plate (8) by their end portions (21), whilst their remaining length (L-I) extends at a distance from the support plate (8), **characterised in that** an inside edge (12) of the front plate (7) is at a short distance from the surface (5) of the rotor (4) and the bristles (9) are inclined at their clamping point (10) relative to the support plate (8) disposed on the low pressure side in order to obtain a defined abutment on the support portion (20) relative to a radial plane (22).

2. Brush seal as claimed in claim 1, **characterised in that** the support plate (8) extends at an axial distance from the bristles (9) and has a region (18) inclined relative to the bristles (9) adjoining the inside edge (13) of an inside bore in the support plate (8), the inner side face (19) of which forms the support portion (20) on which the end portions (21) of the bristles (9) are to be supported.

3. Brush seal as claimed in claim 1 or 2, **characterised in that** the bristles (9) are inclined at an angle of approximately 6°.

4. Brush seal as claimed in one or more of the preceding claims, **characterised in that** the length (I) of the end portions (21) of the bristles (9) to be supported on the support portions (20) is at most one quarter of the total length (L).

5. Brush seal as claimed in claim 4, **characterised in that** the length (I) is approximately 2 mm.

6. Brush seal as claimed in one or more of the preceding claims, **characterised in that** the inside edge (12) of the front plate (7) is at a greater distance from the surface (5) of the rotor (4) than the inside edge (13) of the support plate (8).

7. Brush seal as claimed in one or more of the preceding claims, **characterised in that** the bristles (9) are clamped between the front plate (7) and the support plate (8) by their ends remote from the free ends (11).

8. Brush seal as claimed in claim 7, **characterised in that** a clamping element (24) is provided in the clamping region (10) between the bristles (9) and the front plate (7) as well as the support plate (8).

9. Brush seal as claimed in claim 8, **characterised in that** the clamping element (24) is a slotted tube.

## Revendications

1. Joint-brosse destiné à rendre étanche un rotor par rapport à un carter avec un alésage à travers lequel s'étend le rotor, le joint comprenant une plaque frontale (7) et une plaque d'appui (8), qui sont rapportées sur le carter (2) et entre lesquelles sont retenus un grand nombre de poils de brosse (9) de façon à faire saillie, avec leurs extrémités libres, par-delà un bord intérieur (13) de la plaque d'appui (8), et de façon à être en contact avec une surface (5) du rotor (4), le bord intérieur (13) de la plaque d'appui (8) présentant une distance d'espacement faible par rapport à la surface (5), et la plaque d'appui (8) supportant les poils de brosse (9) à rencontre de leur fléchissement en étant conçue de manière telle, que les poils de brosse (9) soient supportés, avec leurs tronçons d'extrémité (21), sur un secteur d'appui (20) de la plaque d'appui (8), et s'étendant sur le restant de leur longueur (L-l), à distance de la plaque d'appui (8),
**caractérisé en ce qu'**un bord intérieur (12) de la plaque frontale (7) présente une distance d'espacement faible par rapport à la surface (5) du rotor (4), et **en ce que** les poils de brosse (9), pour leur appui défini sur le secteur d'appui (20), sont inclinés par rapport à un plan radial (22), au niveau de leur zone de serrage (10), en direction de la plaque d'appui (8) disposée du côté basse pression.

2. Joint-brosse selon la revendication 1, **caractérisé en ce que** la plaque d'appui (8) s'étend à distance axiale des poils de brosse (9), et présente, à proximité du bord intérieur (13) d'un alésage intérieur dans la plaque d'appui (8), une zone (18) inclinée vers les poils de brosse (9) et sur la surface latérale intérieure (19) de laquelle est formé le secteur d'appui (20) sur lequel doivent être supportés les tronçons d'extrémité (21) des poils de brosse (9).

3. Joint-brosse selon la revendication 1 ou 2, **caractérisé en ce que** les poils de brosse (9) sont inclinés selon un angle d'environ 6°.

4. Joint-brosse selon l'une ou plusieurs des revendications précédentes, **caractérisé en ce que** la longueur (l) des tronçons d'extrémité (21) des poils de brosse (9), qui doivent être supportés par le secteur d'appui (20), vaut au maximum un quart de la longueur totale (L).

5. Joint-brosse selon la revendication 4, **caractérisé en ce que** la longueur (l) vaut environ 2 mm.

6. Joint-brosse selon l'une ou plusieurs des revendications précédentes, **caractérisé en ce que** le bord intérieur (12) de la plaque frontale (7) présente une distance d'espacement à la surface (5) du rotor (4), plus grande que celle correspondante du bord intérieur (13) de la plaque d'appui (8).

7. Joint-brosse selon l'une ou plusieurs des revendications précédentes, **caractérisé en ce que** les poils de brosse (9) sont enserrés, avec leurs extrémités opposées aux extrémités libres (11), entre la plaque frontale (7) et respectivement la plaque d'appui (8).

8. Joint-brosse selon la revendication 7, **caractérisé en ce que** dans la zone de serrage (10), une pièce de serrage (24) est disposée entre les poils de brosse (9) et la plaque frontale (7) ainsi que la plaque d'appui (8).

9. Joint-brosse selon la revendication 8, **caractérisé en ce que** la pièce de serrage (24) est un tube fendu.
